# EUROPEAN PATENT SPECIFICATION

(11) **EP 2 080 101 B1**
(45) Date of publication and mention of the grant of the patent: **13.03.2013**
(21) Application number: 07840525.5
(22) Date of filing: 26.07.2007
(51) Int. Cl.: G06F 13/38

(54) **WIRELESS CARD AND CARD HOLDER FOR DIGITAL CAMERA**
DRAHTLOSE KARTE UND KARTENHALTER FÜR EINE DIGITALKAMERA
CARTE SANS FIL ET SUPPORT DE CARTE POUR APPAREIL DE PRISE DE VUES NUMÉRIQUES

(30) Priority: 29.10.2006 US 863384 P; 18.05.2007 US 750383
(43) Date of publication of application: 22.07.2009
(73) Proprietor: Sony Ericsson Mobile Communications AB, 221 88 Lund (SE)
(72) Inventor: HAYES, Gerard James, Wake Forest, North Carolina 27587 (US); LOUKS, Ronald, Durham, North Carolina 27705 (US); FINDIKLI, Nadi Sakir, Cary, North Carolina 27511 (US)
(74) Representative: Banzer, Hans-Jörg
(86) International application number: PCT/US2007/074420
(87) International publication number: WO 2008/054899

(56) References cited:
- EP-A- 1 675 043
- EP-A- 1 703 411
- US-A1- 2003 109 280
- US-A1- 2004 192 380
- US-A1- 2006 015 663

## Description

### BACKGROUND

The present invention relates generally to digital cameras and, more particularly, to wireless adapters for digital cameras that enable digital cameras to communicate with remote devices.

A digital camera is an electronic device for capturing and storing images electronically instead of on photographic film. Modern digital cameras have many advantages over conventional film cameras and have virtually replaced film cameras In the marketplace. Digital cameras are small, lightweight, and inexpensive to operate since no film is required. Digital cameras allow consumers to view images immediately after they are captured. Consumers can delete images they do not like and retake images. Images captured can be uploaded to photo libraries on the user's home computer or Imported into photo-editing software.

Digital cameras typically include a USB or FIREWIRE port for connecting the digital camera to the user's home computer. A cable plugs into the camera at one end and to the computer at the other end. There are many circumstances in which a user may want to send images wirelessly to remote devices. Because many home computers now have wireless interfaces, it would be convenient for consumers to connect to home computers using a wireless interface. Further, long range wireless interfaces would enable users of digital cameras to access remote devices and services from whatever location the user may currently be in.

To date, wireless interfaces have not been used in digital cameras for several reasons. Wireless interfaces increase the size, weight, and cost of the digital camera. Further, other interfaces in the digital cameras do not provide sufficient power for a wireless transceiver. These design challenges have so far prevented use of wireless interfaces in small, portable digital cameras.

US 2004/192380 A1 discloses a wireless card for use with a digital camera according to the preamble of claim 9 and a wireless adapter for a digital camera. The wireless adapter comprises a card holder having a slot for receiving the wireless card for communication with remote devices over a wireless network, and an interface circuit for electrically connecting the wireless card with the digital camera. The wireless card has a wireless interface for communicating with the remote devices over the wireless network.

### SUMMARY

The present invention provides a wireless adapter for a digital camera as defined in claim 1 to enable communication between the digital camera and remote devices over a wireless network, and a wireless card for use with a digital camera as defined in claim 9. The dependent claims define preferred and advantageous embodiments of the invention.

According to the invention, the wireless adapter and the wireless card, respectively, comprise a file transfer agent configured to receive image data from the digital camera and transfers the image data to a remote device over a wireless network, whereby the file transfer agent emulates a printer and appears to the digital camera like any other printer.

The present invention may be used, for example, to transfer image files to the user's home computer, to post an image to a web album or web blog, or to send the image to web printing service.

The wireless adapter may further comprise a card holder to receive a wireless card. The card holder may be an integral part of the digital camera, or may be an accessory that detachably mounts to the digital camera. The card holder may have a slot to receive the wireless card for communicating with remote devices over a wireless network. The wireless adapter may further have an interface circuit that is configured to electrically connect said wireless card with said digital camera.

The wireless adapter may further comprise a connector to detachably connect said card holder to said digital camera.

In one exemplary wireless adapter, the interface circuit includes a first interface for communicating with said digital camera and a second interface for communicating with said wireless card.

In one exemplary wireless adapter, said first interface comprises a serial interface.

In one exemplary wireless adapter, said second interface comprises a serial interface.

In one exemplary wireless adapter, said first and second interfaces comprise Universal Serial Bus (USB) interfaces, and wherein said interface circuit comprises a USB host controller.

In one exemplary embodiment, the wireless card may further comprise a first interface configured to communicate with a wireless adapter.

In one exemplary wireless card, the first interface comprises a serial interface or a Universal Serial Bus (USB) interface.

### BRIEF DESCRIPTION OF THE DRAWINGS

Fig. 1 is a schematic diagram of an exemplary wireless networking environment in which the wireless adapter of the present invention may be used.
Fig. 2 illustrates an exemplary wireless adapter for a digital camera according to one exemplary embodiment.
Fig. 3 is a functional block diagram illustrating the components of the wireless adapter according to a first exemplary embodiment.
Fig. 4 is a functional block diagram illustrating the components of the wireless adapter according to a second exemplary embodiment.

### DETAILED DESCRIPTION

Referring now to the drawings, a wireless adapter 100 for a digital camera 10 is shown that enables wireless communications between a digital camera 10 lacking inherent wireless communication capability and remote devices over wireless networks. Remote devices may comprise, for example, a home computer 30, web album 32, web blog 34, or web printing service 36. The wireless adapter 100 can be used with both digital still cameras and digital video cameras.

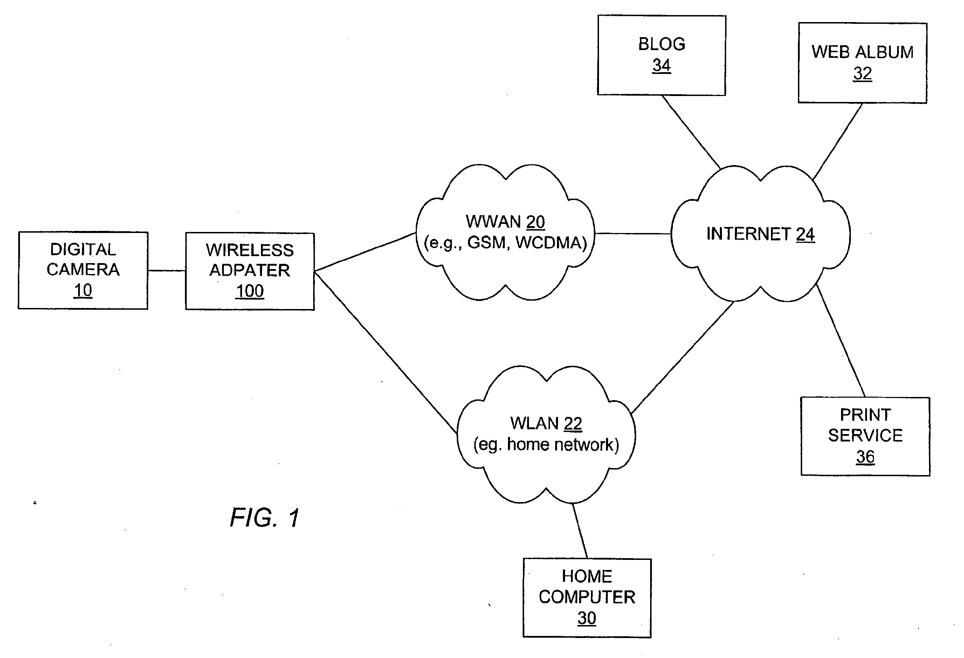

Figure 1 shows an exemplary networking environment in which the wireless adapter 100 may be used. As will be described in greater detail below, the wireless adapter 100 may connect to a wireless wide area network (WWAN) 20, such as a cellular network or WiMAX network, or to a wireless local area network (WLAN) 22. The WLAN 22 comprises any local area network that can be accessed wirelessly, such as a home network with a wireless router. The WWAN 20 and/or WLAN 22 may provide connection to the Internet 24. A home computer 30 is connected to the WLAN 22. Web album 32, web blog 34, and print server 36 reside are connected to the Internet 24.

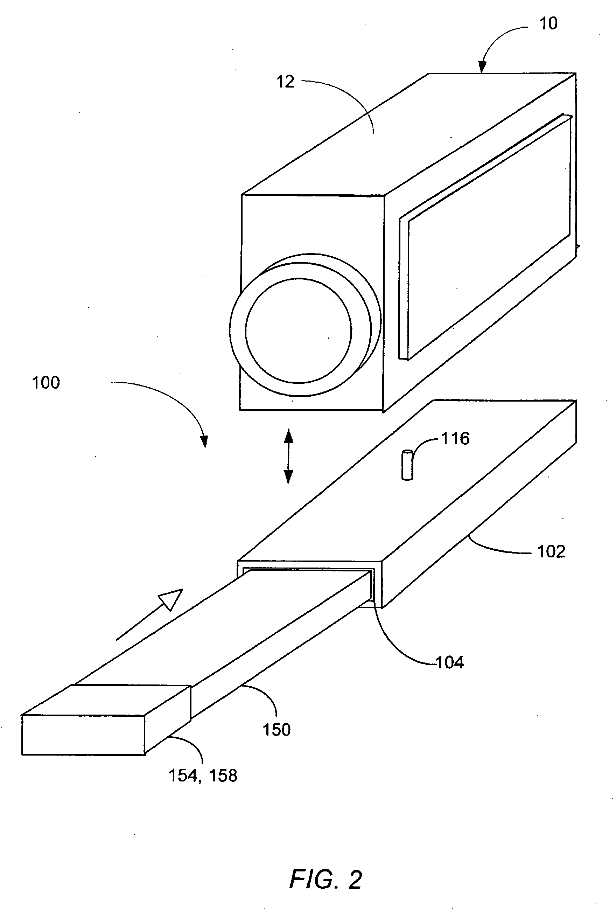

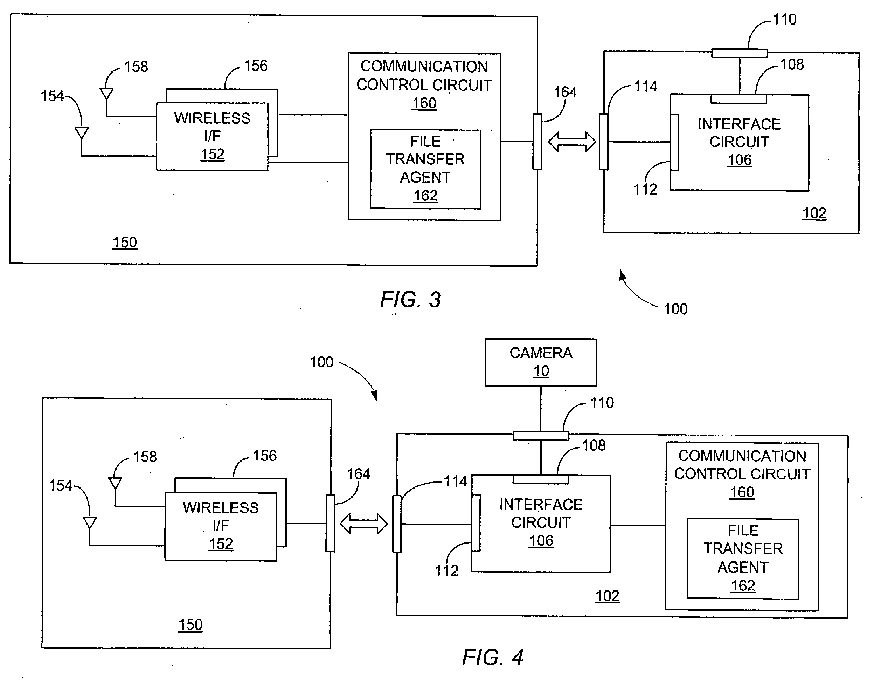

Figure 2 illustrates an exemplary embodiment of the wireless adapter 100 for a digital camera 10. While the digital camera 10 is illustrated as a digital video camera in this embodiment, the present invention may also be used with digital still cameras. The wireless adapter 100 comprises a card holder 102 having a card slot 104 and a wireless card 150 insertable into the card slot 104 of the card holder 102. The wireless card 150 includes at least one wireless interface 152 (Figure 3) and antenna 154 for communicating with remote devices (e.g., home computer 30, web album 32, web blog 34, printing service 36) over a wireless network (e.g., WWAN 20, WLAN 22). The card holder 102 may be integrated with the body 12 of the digital camera 10. Alternatively, the card holder 102 may comprises an accessory device that detachably mounts to the digital camera 10 as shown in Figure 2. In the exemplary embodiment, the card holder 102 includes a mounting screw 116 that detachably connects the card holder 102 to a tripod connector (not shown) on the digital camera 10.

Figure 3 is a functional block diagram of a wireless adapter 100 according to a first exemplary embodiment. The card holder 102 in this embodiment includes an interface circuit 106 to interface the wireless card 150 with the digital camera 10. The interface circuit 106 includes a camera interface 108 and a card interface 112. Connector 110 connects the camera interface with the digital camera 10. Connector 114 connects the card interface 112 with the wireless card 150. The interface circuit 106 may implement an industry standard protocol, such as the Universal Serial Bus (USB) protocol, to facilitate communication between the digital camera 10 and the wireless card 150. In this case, interface circuit 106 may function as a USB host controller and the digital camera 10 and wireless card 150 may function as USB clients. If both the digital camera 10 and wireless card 150 implement USB On-The-Go, the interface circuit 106 is not required to function as a USB host controller.

As previously described, the wireless card 150 includes at least one wireless interface 152 coupled to an antenna 154. The wireless interface 152 may comprise a long-range wireless interface for connecting over long distances to a WWAN 20, such as a cellular network (e.g. GSM, CDMA, etc.) or WiMAX network. Alternatively, the wireless interface 152 may comprise a short-range wireless interface (e.g., BLUETOOTH, WiFi, RFID, NFC) for connecting over short distances to a WLAN 22, such as the user's home network. In a preferred embodiment, a second wireless interface 156 and second antenna 158 may also be provided. In this case, the first wireless interface 152 can be used to connect over long distances to WWANs 20. The second wireless interface 156 may be used to connect over short distances to WLANs 22.

The wireless card 150 further includes a communication control circuit 160 for controlling the operation of the wireless card 150. The communication control circuit 160 includes processing circuits and memory to enable communication over wireless networks. The processing circuits may comprise one or more processors and/or processing hardware. Connector 164 connects the communication control circuit 160 with the card holder 102. The communication control circuit 160 includes a file transfer agent 162, which can be implemented as a software application on a processor. The file transfer agent 162 provides remote access capability to the digital camera 10. The file transfer agent 162 stores information about one or more remote destinations. Such information includes, for example, the destination address for each destination and authentication information, such as the username and password for each destination. The file transfer agent 162 is configured to receive image data from the digital camera 10 and transfer the image data to the remote destination via one of the wireless interfaces 152, 156.

In one embodiment, the file transfer agent 162 emulates a printer as described in related international patent application WO 2008/054898 A1. In this embodiment, file transfer agent 162 implements PictBridge or other direct printing technology to communicate directly with the digital camera 10. The file transfer agent 162 can create one or more emulated printers that appear to the digital camera 10 like any other printer. When the user "prints" to an emulated printer, the file transfer agent 162 transfers the image data to a corresponding remote destination. By emulating a printer, wireless adapter 100 provides networking capabilities to any digital camera 10 that can connect directly to a printer.

Figure 4 illustrates another exemplary embodiment of the wireless adapter 100. This embodiment is similar to the previous embodiment and the same reference numbers have been used to indicate components that are the same. As shown in Figure 4, the card holder 102 includes an interface circuit 106 as previously described with a camera interface 108 and card interface 112. The wireless card 150 includes first and second wireless interfaces 152, 156 coupled to first and second antennas 154, 158 respectively. In this embodiment, the communication control circuit 160 and the file transfer agent 162 reside in card holder 102 instead of wireless card 150. The wireless card 150 functions as a modem. The file transfer agent 162 functions as previously described. One advantage of this arrangement is that the card holder 102 can be used with an industry standard wireless card 150.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A wireless adapter (100) for a digital camera (10),
comprising a card holder (102) having a slot (104) to receive a wireless card (150) for communicating with a specified remote destination (30, 32, 34, 36) over a wireless network (20, 22);
**characterized by**
a file transfer agent (162) configured to receive image data from the digital camera (10) and transfer the image data received from the digital camera (10) to the specified remote destination (30, 32, 34, 36) using a wireless interface (152, 156); wherein the file transfer agent (162) is configured to emulate a printer; and
an interface circuit (106) configured to interface the file transfer agent (162) with the digital camera (10) and the wireless card (150).

2. The wireless adapter (100) of claim 1 wherein the interface circuit (106) is configured to electrically connect the wireless card (150) with the digital camera (10).

3. The wireless adapter (100) of claim 1 wherein the wireless card (150) is insertable into the slot (104) in the card holder (102), and wherein the wireless card (150) includes the wireless interface (152, 156) for communicating with the specified remote destination (30, 32, 34, 36) over the wireless network (20, 22).

4. The wireless adapter (100) of claim 1 wherein the file transfer agent (162) is associated with one of the card holder and the wireless card.

5. The wireless adapter (100) of claim 1 further comprising a connector (116) to detachably connect the card holder (102) to the digital camera (10).

6. The wireless adapter (100) of claim 1 wherein the interface circuit (106) includes a camera interface (110) to interface with the digital camera (10) and a card interface (112) to interface with the wireless card (150).

7. The wireless adapter (100) of claim 6 wherein the camera interface (110) comprises a serial interface, and wherein the card interface (112) comprises a serial interface.

8. The wireless adapter (100) of claim 7 wherein the camera and card interfaces (110, 112) comprise Universal Serial Bus (USB) interfaces, and wherein the interface circuit (106) comprises a USB host controller.

9. A wireless card (150) for use with a digital camera (10), comprising
a wireless interface (152, 156) configured to communicate with remote devices (30, 32, 34, 36) over a wireless network (20, 22);
**characterized by**
a file transfer agent (162) configured to receive image data from the digital camera (10) and transfer the image data to a specified destination device (30, 32, 34, 36) via the wireless interface (152, 156); wherein the file transfer agent (162) is configured to emulate a printer.

10. The wireless card (150) of claim 9 further comprising a first interface (164) configured to communicate with a wireless adapter (100) for a digital camera (10).

11. The wireless card (150) of claim 10 wherein the first interface (164) comprises a serial interface.

12. The wireless card (150) of claim 11 wherein the first interface (164) comprises a Universal Serial Bus (USB) interface.

## Patentansprüche

1. Drahtloser Adapter (100) für eine Digitalkamera (10),
umfassend einen Kartenhalter (102), welcher einen Schlitz (104) zum Aufnehmen einer drahtlosen Karte (150) zur Kommunikation mit einer bestimmten entfernten Stelle (30, 32, 34, 36) über ein drahtloses Netzwerk (20, 22) aufweist;
**gekennzeichnet durch**
einen Datenübertragungsvermittler (162), welcher ausgestaltet ist, um Bilddaten von der Digitalkamera (10) zu empfangen und die von der Digitalkamera (10) empfangenen Bilddaten zu der bestimmten entfernten Stelle (30, 32, 34, 36) durch Verwenden einer drahtlosen Schnittstelle (152, 156) zu übertragen; wobei der Datenübertragungsvermittler (162) ausgestaltet ist, um die Funktion eines Druckers zu emulieren; und
eine Schnittstellenschaltung (106), welche ausgestaltet ist, um den Datenübertragungsvermittler (162) mit der Digitalkamera (10) und der drahtlosen Karte (150) zu verbinden.

2. Drahtloser Adapter (100) nach Anspruch 1, wobei die Schnittstellenschaltung (106) ausgestaltet ist, um die drahtlose Karte (150) mit der Digitalkamera (10) elektrisch zu verbinden.

3. Drahtloser Adapter (100) nach Anspruch 1, wobei die drahtlose Karte (150) in den Schlitz (104) des Kartenhalters (102) einsteckbar ist, und wobei die drahtlose Karte (150) die drahtlose Schnittstelle (152, 156) zur Kommunikation mit der bestimmten entfernten Stelle (30, 32, 34, 36) über das drahtlose Netzwerk (20, 22) aufweist.

4. Drahtloser Adapter (100) nach Anspruch 1, wobei der Datenübertragungsvermittler (162) mit dem Kartenhalter und der drahtlosen Karte verbunden ist.

5. Drahtloser Adapter (100) nach Anspruch 1 weiter umfassend einen Verbinder (116), um den Kartenhalter (102) mit der Digitalkamera (10) lösbar zu verbinden.

6. Drahtloser Adapter (100) nach Anspruch 1, wobei die Schnittstellenschaltung (106) eine Kameraschnittstelle (110) zum Verbinden mit der Digitalkamera (10) und eine Kartenschnittstelle (112) zum Verbinden mit der drahtlosen Karte (150) aufweist.

7. Drahtloser Adapter (100) nach Anspruch 6, wobei die Kameraschnittstelle (110) eine serielle Schnittstelle aufweist, und wobei die Kartenschnittstelle (112) eine serielle Schnittstelle aufweist.

8. Drahtloser Adapter (100) nach Anspruch 7, wobei die Kamera- und die Kartenschnittstellen (110, 112) USB-Schnittstellen (USB, Universal Serial Bus) umfassen, und wobei die Schnittstellenschaltung (106) einen USB-Hostkontroller umfasst.

9. Drahtlose Karte (150) zur Verwendung mit einer Digitalkamera (10), unfassend
eine drahtlose Schnittstelle (152, 156), welche ausgestaltet ist, um mit entfernten Einheiten (30, 32, 34, 36) über ein drahtloses Netzwerk (20, 22) zu kommunizieren;
**gekennzeichnet durch**
einen Datenübertragungsvermittler (162), welcher ausgestaltet ist, um Bilddaten von einer Digitalkamera (10) zu empfangen und die Bilddaten an einer bestimmten entfernten Stelle (30, 32, 34, 36) über die drahtlosen Schnittstelle (152, 156) zu übermitteln; wobei der Datenübertragungsvermittler (162) ausgestaltet ist, die Funktion eines Druckers zu emulieren.

10. Drahtlose Karte (150) nach Anspruch 9, weiter umfassend eine erste Schnittstelle (164), welche ausgestaltet ist, um mit einem drahtlosen Adapter (100) für eine Digitalkamera (10) zu kommunizieren.

11. Drahtlose Karte (150) nach Anspruch 10, wobei die erste Schnittstelle (164) eine serielle Schnittstelle umfasst.

12. Drahtlose Karte (150) nach Anspruch 11, wobei die erste Schnittstelle (164) eine USB-Schnittstelle (Universal Serial Bus) umfasst.

## Revendications

1. Adaptateur sans fil (100) pour un appareil photo numérique (10),
comprenant un support de carte (102) présentant une fente (104) pour recevoir une carte sans fil (150) destinée à communiquer avec une destination distante spécifiée (30, 32, 34, 36) sur un réseau sans fil (20, 22) ;
**caractérisé par**
un agent de transfert de fichiers (162) configuré pour recevoir des données d'images provenant de l'appareil photo numérique (10) et pour transférer les données d'images reçues de l'appareil photo numérique (10) à la destination distante spécifiée (30, 32, 34, 36) en utilisant une interface sans fil (152, 156) ; où l'agent de transfert de fichiers (162) est configuré pour émuler une imprimante ; et
un circuit d'interface (106) configuré pour mettre en interface l'agent de transfert de fichiers (162) avec l'appareil photo numérique (10) et la carte sans fil (150).

2. Adaptateur sans fil (100) de la revendication 1, dans lequel le circuit d'interface (106) est configuré pour connecter électriquement la carte sans fil (150) à l'appareil photo numérique (10).

3. Adaptateur sans fil (100) de la revendication 1, dans lequel la carte sans fil (150) peut être insérée dans la fente (104) dans le support de carte (102), et dans lequel la carte sans fil (150) comporte l'interface sans fil (152, 156) pour communiquer avec la destination distante spécifiée (30, 32, 34, 36) sur le réseau sans fil (20, 22).

4. Adaptateur sans fil (100) de la revendication 1, dans lequel l'agent de transfert de fichiers (162) est associé à un élément parmi le support de carte et la carte sans fil.

5. Adaptateur sans fil (100) de la revendication 1, comprenant en outre un connecteur (116) destiné à connecter de manière amovible le support de carte (102) à l'appareil photo numérique (10).

6. Adaptateur sans fil (100) de la revendication 1, dans lequel le circuit d'interface (106) comporte une interface d'appareil photo (110) pour se mettre en interface avec l'appareil photo numérique (10) et une interface de carte (112) pour se mettre en interface avec la carte sans fil (150).

7. Adaptateur sans fil (100) de la revendication 6, dans lequel l'interface d'appareil photo (110) comprend une interface série, et dans lequel l'interface de carte (112) comprend une interface série.

8. Adaptateur sans fil (100) de la revendication 7, dans lequel les interfaces (110, 112) de carte et d'appareil photo comprennent des interfaces de Bus Série Universel (USB), et dans lequel le circuit d'interface (106) comprend un contrôleur hôte USB.

9. Carte sans fil (150) à utiliser avec un appareil photo numérique (10), comprenant
une interface sans fil (152, 156) configurée pour communiquer avec des dispositifs distants (30, 32, 34, 36) sur un réseau sans fil (20, 22) ;
**caractérisée par** :
un agent de transfert de fichiers (162) configuré pour recevoir des données d'images provenant de l'appareil photo numérique (10) et pour transférer les données d'images à un dispositif de destination spécifiée (30, 32, 34, 36) par l'intermédiaire de l'interface sans fil (152, 156) ; où l'agent de transfert de fichiers (162) est configuré pour émuler une imprimante.

10. Carte sans fil (150) de la revendication 9, comprenant en outre une première interface (164) configurée pour communiquer avec un adaptateur sans fil (100) pour un appareil photo numérique (10).

11. Carte sans fil (150) de la revendication 10, dans laquelle la première interface (164) comprend une interface série.

12. Carte sans fil (150) de la revendication 11, dans laquelle la première interface (164) comprend une interface de Bus Série Universel (USB).
